# NEUE EUROPÄISCHE PATENTSCHRIFT

(11) **EP 0 926 449 B2**
(45) Veröffentlichungstag und Bekanntmachung des Hinweises auf die Entscheidung über den Einspruch: **21.05.2003**
(45) Hinweis auf die Patenterteilung: 15.03.2000
(21) Anmeldenummer: 97122807.7
(22) Anmeldetag: 23.12.1997
(51) Int. Cl.: F24C 15/32, F24C 15/20

(54) **Verfahren zum Entfeuchten eines Garraumes eines Dampfgargerätes sowie Vorrichtung hierfür**
Method for dehumidifying a cooking room of a steam cooking apparatus and apparatus therefor
Procédé pour déshumidifier un espace à cuire d'un dispositif pour cuire à la vapeur et dispositif approprié

(43) Veröffentlichungstag der Anmeldung: 30.06.1999
(73) Patentinhaber: eloma GmbH Grossküchentechnik, 82212 Maisach (DE)
(72) Erfinder: Helm, Peter, Dipl. Ing., 82216 Maisach (DE)
(74) Vertreter: Strobel, Wolfgang, Dipl.-Ing.

(56) Entgegenhaltungen:
- EP-A- 0 152 571
- EP-A- 0 559 080
- EP-A- 0 615 069
- EP-A- 0 752 561
- EP-B- 0 386 862
- EP-B- 0 653 593
- Technische Zeichnung (Nr. 2012.0502 E) eines Lüfterrades der Fa. Rational AG vom 22.03.95
- Prospekt der Fa. Rational AG: "Combi-Dämpfer. Die neue C-Linie", August 1995

## Beschreibung

Die vorliegende Erfindung betrifft ein Verfahren zum Entfeuchten eines zumindest teilweise mit Dampf gefüllten Garraumes eines Dampfgargeräts, nach dem Oberbegriff des Anspruchs 1.

Weiterhin betrifft die vorliegende Erfindung eine Vorrichtung zum Entfeuchten eines zumindest teilweise mit Dampf gefüllten Garraumes eines Dampfgargerätes, nach dem Oberbegriff des Anspruchs 4.

Nicht nur im Bereich der Großküchentechnik ist die Tendenz zu erkennen, immer mehr Garungsprozesse von Nahrungsmitteln mit Hilfe von Dampfgargeräten zu vollziehen. Bei diesen Garprozessen ist insbesondere die exakte Steuerung des Garprozesses selbst als auch die verkürzte Garzeit gegenüber üblichen Garprozessen wie beispielsweise Grillen, von Vorteil.

Bei Dampfgarverfahren werden die Nahrungsmittel in gesättigter Dampfatmosphäre oder in einem Heißluft-Dampfgemisch gegart, wobei der Dampf einerseits durch Entweichen von Feuchte aus den Nahrungsmitteln selbst und andererseits durch gesteuerte zusätzliche Hinzufügung im Garraum entsteht bzw. erzeugt wird.

Ein wesentlicher Nachteil des Dampfgarprozesses ist, daß die gegarten Produkte an ihrer Oberfläche eine durch den Dampf aufgeweichte Oberschicht, beispielsweise der Haut des Geflügels, aufweisen, die nach Herausnehmen in der Umgebungsluft relativ schnell schrumpft und bei Fleischprodukten ein gegenüber dem Verbraucher ungünstiges Aussehen aufweist. Insbesondere kann bei herkömmlichen Dampfgarverfahren der Effekt eines gegrillten Nahrungsmittels nicht erreicht werden.

Um diesen Nachteil zu beheben, wurden bereits verschiedene Verfahren und Vorrichtungen vorgeschlagen.

Aus der EP-A-0 752 561 ist ein Backofen bekannt, wobei für aus dem Gehäuse austretende kühlluft durch die Ofentür eine Ausblasstrecke führt, in die ein Wrasenkanal der Ofentür mündet, der strömungstechnisch mit der Backofenmuffel in Verbindung steht.

Aus der DE-C-195 18 004 C1 ist ein Verfahren zur thermischen Behandlung von Geflügel und/oder Geflügelteilen bekannt, bei dem zunächst der Garprozeß bei hochgesättigter Dampfatmosphäre erfolgt und sich an den Dampfgarprozeß ein Garprozeß anschließt, in dem eine kontrollierte Entfeuchtung der Garatmosphäre erfolgt, wodurch die zu garenden Produkte gebräunt werden. In dieser Druckschrift wird jedoch nur allgemein von einer kontrollierten Entfeuchtung gesprochen und der Fachmann entnimmt hieraus keinerlei Hinweise, wie diese Entfeuchtung erfolgen soll, bzw. mit welchen Mitteln diese Entfeuchtung erreicht werden.soll

Aus der EP-A-0 559 080 B1 ist eine Vorrichtung zum Abführen einer bestimmten Gaskomponente bekannt, wobei mit der bestimmten Gaskomponente insbesondere die Feuchtigkeit gemeint ist. Dies geschieht laut EP-A-0 559 080 B1 mittels einer durch ein Radialgebläse erzeugten Gasströmung auf eine Gehäuseöffnung, die ihrerseits mittels einer steuerbaren Klappe das Abführen von Gas steuerbar macht. Weiterhin wird angegeben, daß die Senkung des Feuchtigkeitsgehalts im Inneren des Garraumes durch trockene nachströmende Luft ermöglicht wird. Jedoch wird dem Fachmann keinerlei Hinweise gegeben, woher diese trockene Luft stammt, und wie und wo sie in den Garraum eingebracht wird. Durch die aufwendige und komplizierte Abführvorrichtung von Feuchte ist diese Lösung besonders kostspielig, sehr schlecht reinigbar und in ihrem Einsatz äußerst begrenzt.

Aus der DE-A-42 06 845 ist ein Verfahren und eine Vorrichtung zum Ermitteln des Anteils einer Gaskomponente in einem Dampfgemisch sowie die Verwendung einer derartigen Vorrichtung bekannt. Insbesondere soll diese Vorrichtung zum Überwachen des Anteils an Wasserdampf in der Atmosphäre eines Garraums oder als Geber für die Steuerung des Anteils an Wasserdampf in dem Garraum geeignet sein. Hierzu weist das das Radialgebläse bildende Lüfterrad zusätzliche Hilfsschaufeln rückseitig an diesem Gebläse auf. Diese Hilfsschaufeln dienen zum Schützen von im Meßbereich angeordneten Meßfühlern vor unerwünschten und zum Teil auch unbeeinflußbaren Störungen im Garraum. Auch in dieser Druckschrift wird dem Fachmann keinerlei Hinweis gegeben, wie er eine Entfeuchtung eines Garraumes vornehmen soll, und welche Mittel hierzu geeignet sind.

Aus der EP-B-0 386 862 ist ein Gargerät bekannt, bei dem eine Feuchteregelung verwirklicht werden soll und bei dem eine Einrichtung zum Abführen von euchtigkeit aus dem Garraum vorgesehen ist. Mit Hilfe eines Lüfterrades eines Radialgebläses im Garraum wird das Heißluft-Dampfgemisch umgewälzt, wobei in dem zentralen Bereich des Lüfterrades das umzuwälzende Dampfgemisch im wesentlichen axial aus dem zentralen Bereich des Garraums angesaugt wird und im wesentlichen radial nach außen beschleunigt und abgeleitet wird, wobei überschüssiger Dampf bzw. überschüssiges Heizluft-Dampfgemisch über eine Abluftöffnung aus dem Garraum abgelassen wird, und zur Entfeuchtung trockene Frischluft von außen rückseitig zugeführt wird.

In Figur 3 dieser Druckschrift ist ein Lüfterrad mit Hilfsschaufeln versehen, die an der hinteren Stirnseite radial angebracht sind. Die Hilfsschaufeln sollen einen Unterdruck beim Betrieb des Hauptlüfters erzeugen, der bewirkt, daß durch Öffnungen der Innenkastenwand des Gargeräts und Bohrungen in der Tragscheibe des Hauptlüfters trockene Umgebungsluft in den Garraum strömt. Eine Angabe wie viele Bohrungen, deren Größe und deren Anordnung in der Tragscheibe des Hauptlüfters fehlt jedoch gänzlich.

Aus der EP-A-0 615 069 ist ebenfalls ein Lüfterrad bekannt. Mit dem Lüfterrad gemäß dieser Druckschrift soll die Aufgabe gelöst werden, in konstruktiv einfacher Weise und ohne Vorsehen zusätzlicher Kondensatabscheideeinrichtungen eine zuverlässige Abscheidung von Fetteilchen bzw. Kondensat aus der Garraumatmosphäre zu gewährleisten. Hierzu sind mindestens zwischen einigen Schaufeln nahe der Stützscheibe, jedoch mit Abstand von dieser Leitbleche angeordnet, deren radial äußere Außenkante im wesentlichen mit dem Außenumfang des Lüfterrades fluchtet, deren radial äußere Außenkannte im wesentlichen mit dem Außenumfang des Lüfterrades fluchtet, deren radial innere Innenkante mit Abstand von der Drehachse des Lüfterrades liegt, und die mit der Stützscheibe und den jeweils benachbarten beiden Schaufeln jeweils eine Düseneinrichtung zum Erzeugen einer radial nach außen gerichteten Gasströmung nahe der Stützscheibe bilden. Um diesen Effekt zu erhöhen, sind die Leitbleche von ihrer Innenkante zu ihrer Außenkante in Richtung auf die Stützscheibe geneigt ausgebildet.

Der vorliegenden Erfindung liegt die Aufgabe zugrunde, ein Verfahren zum Entfeuchten eines zumindest teilweise mit Dampf gefüllten Garraums eine Dampfgargerätes zu schaffen, mit dem der Dampf auf einfache Weise entfeuchtet werden kann.

Weiterhin liegt der Erfindung die Aufgabe zugrunde, eine entsprechende Vorrichtung zum Entfeuchten eines zumindest teilweise mit Dampf gefüllten Garraumes eines Gargeräts zu schaffen, die konstruktiv besonders einfach, im Betrieb besonders effektiv und gegebenenfalls auch nachträglich an bereits vorhandene Gargeräte angebaut werden kann.

Diese Aufgaben werden durch die Merkmale des Anspruchs 1 bzw. 3 gelöst.

Schließlich schlägt die vorliegende Erfindung ein entsprechendes Dampfgargerät vor.

Gemäß der vorliegenden Erfindung zeichnet sich das erfindungsgemäße Verfahren dadurch aus, daß die Frischluft mittels in den Öffnungen vorgesehen Ablenkeinrichtungen nach dem Äußeren des Lüfterrades abgelenkt wird, wobei die Frischluft an bevorzugt ebenen Ablenkplatten abgelenkt wird, die schräg in das Innere des Lüftrades vorspringen.

Dadurch wird erreicht, daß durch den im Bereich des Lüfterrades bestehenden Unterdruck Frischluft von außen angesaugt wird und sofort mit dem Dampfgemisch im Innenraum des Garraumes vermischt wird, wobei durch den bestehenden Überdruck im Garraum das dort befindliche Dampfgemisch über die Abluftöffnung oder den Kondensatablauf bzw. Wrasenablauf aus dem Garraum hinausgedrückt wird. Mit Hilfe der in den Öffnungen vorgesehenen Ablenkeinrichtungen in Form von Ablenkplatten wird ein strömungstechnisch besonders geeigneter Luftstromverlauf geschaffen, der eine besonders wirksame Ansaugleistung erzeugt. Dadurch kann wirksam eine Entfeuchtung im Garraum durchgeführt werden.

Weiterhin ergibt sich vorteilhafterweise, daß die Frischluftzufuhr mittels eines Ventils im Frischluftzufuhrkanal gesteuert wird, so daß dadurch eine gesteuerte Entfeuchtung ermöglicht wird.

Die erfindungsgemäße Vorrichtung zeichnet sich dadurch aus, daß in den Öffnungen Ablenkeinrichtungen des eintretenden Luftstromes vorgesehen sind, die als, bevorzugt ebene, Ablenkplatten ausgebildet sind, die schräg in das Innere des Lüfterrades vorspringen.

Somit wird mittels einfachster konstruktiver Ausgestaltung eine Vorrichtung zum wirksamen Entfeuchten eines mit Dampfatmosphäre gefüllten Garraumes eines Dampfgargerätes geschaffen, die weiterhin die Vorteile einer einfachen Herstellung aufweist. Dabei sind die Ablenkeinrichtungen plattenförmig ausgebildet, was konstruktiv nur wenig Aufwand erfordert.

Besonders vorteilhaft ist die Ausrichtung der Ablenkeinrichtungen in einem Winkel von 30° bis 60° mit der zugehörigen Stirnseite des Lüfterrades, wobei insbesondere bevorzugt ein Winkel von 45° gewählt wird.

Weiterhin hat sich herausgestellt, daß rechteckförmige Öffnungen besonders vorteilhaft sind, wobei sie bevorzugt quadratisch sind.

Weiterhin ergibt sich mit besonderem Vorteil eines einfachen Aufbaus und einer einfachen Herstellung, wenn die Ablenkeinrichtungen durch aus der zugehörigen Stirnseite des Lüfterrades teilweise ausgeschnittene und in das Innere des Lüfterrades gebogene Abschnitte gebildet sind. Hierbei wird mit besonderem Vorteil ein metallischer Werkstoff für das Lüfterrad gewählt, so daß die Ablenkeinrichtungen an drei ihrer Seiten aus der Stirnseite ausgeschnitten sind und nach innen gebogen sind, wobei als Verbindungselement die vierte Randseite dient.

Eine besonders effektive Anordnung ergibt sich dadurch, daß die wenigstens eine Frischluftzufuhröffnung oberhalb der Drehachse des Lüfterrades angeordnet ist, wobei sie im wesentlichen den ihr gegenüberliegenden Öffnungen in der Stirnseite des sich drehenden Lüfterrades gegenüberliegt. Dabei befindet sich die Frischluftzufuhröffnung gegenüberliegend dem oberen Bereich des Lüfterrades. Dies hat den Vorteil, daß eine wirksame Frischluftzufuhr unabhängig von der Drehrichtung des Lüfterrades erfolgen kann, wobei üblicherweise zur Erzielung eines gleichmäßigen Garvorgangs das Lüfterrad abwechselnd in beide Drehrichtungen gedreht wird.

In einer einfachen Ausführungsform kann die Frischluftöffnung eine Zuführöffnung mit einfacher Verschlußkappe sein. Vorteilhafterweise ist jedoch eine Zuführleitung vorgesehen.

Vorteilhafterweise ist in dieser Zuführleitung ein steuerbares Ventil zur Dosierung der Frischluftzufuhr vorgesehen, welches somit eine Steuerung der Entfeuchtung beispielsweise mittels eines vorbestimmten Programmes, das mittels eines entsprechenden Stellgliedes das Ventil steuert, ermöglicht.

Das Ventil in der Frischluftzufuhröffnung kann dabei eine drehbare Klappe sein, mittels derer über einen gewissen Bereich eine kontinuierliche Änderung des Frischluftzufuhrstromes ermöglicht wird.

In einer alternativen Ausführungsform ist das Ventil als ein Abdeckventil ausgebildet, mit einer Verschlußklappe, beispielsweise in Form eines Kolbens, der mit einem Ventilsitz zusammenwirkt, wobei mittels einer Verschlußklappenbetätigungseinrichtung die Verschlußklappe in eine Ventilöffnungsstellung bringbar ist. Die Steuerung der Frischluftzufuhr erfolgt dabei über die Zeitdauer der Öffnung des Ventils.

Der Kolben des Ventils kann dabei über eine Kolbenstange mit einem Magnetventil verbunden sein, das programmgesteuert betägigbar ist, wodurch im Zusammenhang mit vorbestimmten Garprogrammen die Entfeuchtung entsprechend gesteuert werden kann.

Werden weiterhin Meßeinrichtungen der Feuchte, direkt oder indirekt, vorgesehen, so kann eine Regelung der Entfeuchtung und ein automatischer Garverlauf in Abhängigkeit von den Istzuständen im Garraum vorgenommen werden.

Weitere Einzelheiten, Merkmale und Vorteile ergeben sich aus der nachfolgenden Beschreibung unter Bezugnahme auf die Zeichnung. Darin zeigt:
- Figur 1 eine schematische Seitenansicht einer erfindungsgemäßen Vorrichtung zum Entfeuchten des Garraumes eines Dampfgargerätes, mit der auch das erfindungsgemäße Verfahren durchgeführt werden kann;
- Figur 2 eine Schnittansicht gemäß der Linie II-II von Figur 1 durch das Lüfterrad der erfindungsgemäßen Vorrichtung.

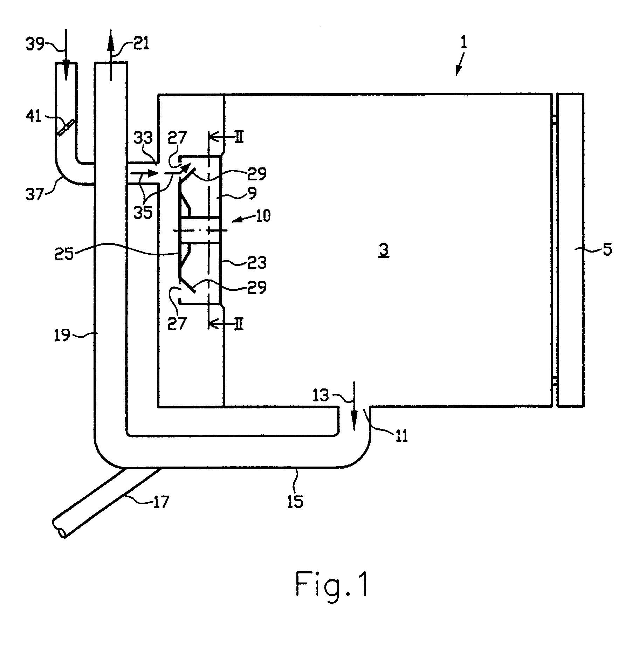

In Figur 1 ist ein Dampfgargerät bzw. ein Heißluft-Dampfgemisch-Gargerät 1 dargestellt. Das Dampfgargerät 1 weist einen Garraum 3 auf. In diesem Garraum sind Einrichtungen zum Aufnehmen von Gargut (nicht dargestellt) in üblicher Weise einsetzbar bzw. vorhanden. Der Garraum 3 ist über eine Tür 5 zugänglich.

Im der Tür 5 gegenüberliegenden Bereich des Garraums 3 ist eine Abdeckplatte vorgesehen. Diese kann über die gesamte Höhe des Garraums 3 verlaufen, verläuft jedoch nicht über die gesamte Breite, sondern weist einen deutlichen Abstand von der Seitenwand des Garraumes an beiden Seitenrändern der Abdeckplatte auf.

Diese Ränder (nicht dargestellt) dienen, wie bei derartigen Gargeräten bekannt, zum Durchströmen von Luft, die mittels eines Lüfterrades 9 in Umwälzung versetzt wird. Das Lüfterrad 9 ist Teil eines Radialgebläses mit einem entsprechenden Antrieb, wie er im Stand der Technik bekannt ist.

Der Garraum 3 weist eine Austrittsöffnung 11 auf, durch die Abluft aus dem Garraum 3 gemäß Pfeil 13 strömen kann.

An die Austrittsöffnung 11 des Garraums 3 ist eine Ablaufleitung 15 angeschlossen, die sich im dargestellten Beispielsfall gemäß Figur 1 unterhalb des Dampfgeräts 1 erstreckt. In der Ablaufleitung 15 kann der Wasserdampf aus dem Garraum 3 kondensieren und läuft über den Kondensatabfluß 17 ab.

Die verbleibenden gasförmigen Komponenten der Abluft können über eine Steigleitung 19 gemäß Pfeil 21 wieder nach außen abgegeben werden.

In herkömmlicher Weise wird an der dem Garraum 3 gegenüberliegenden Stirnseite 23 des Lüfterrades 9 das im Garraum 3 befindliche Gas bzw. Dampf-Heißiuftgemisch angesaugt, strömt durch das Lüfterrad und wird in radialer Richtung des Lüfterrades 9 beschleunigt und in den Garraum 3 zurückbefördert. Die Öffnung kann dabei so groß wie die vordere Stimseite 23 des Lüfterrades 9 sein.

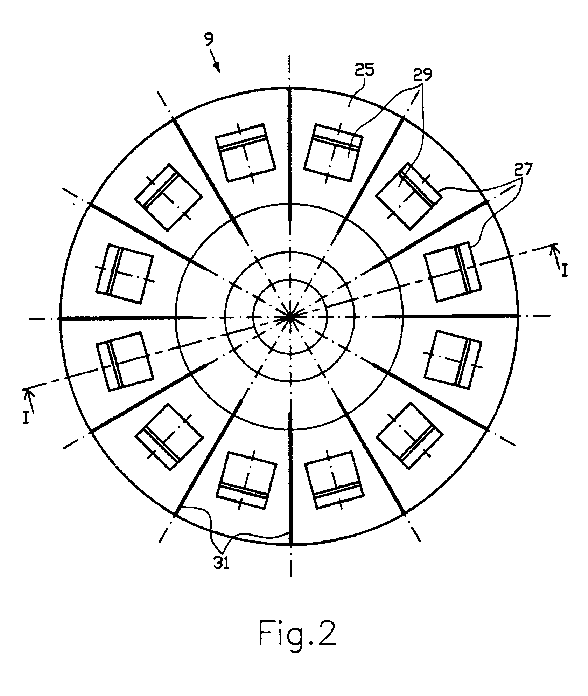

Wie aus Figur 2 deutlicher hervorgeht, sind in der hinteren im wesentlichen geschlossenen Stimseite 25 Öffnungen 27 vorgesehen, in denen Ablenkeinrichtungen 29 vorgesehen sind.

Diese Ablenkeinrichtungen 29 sind im Beispielsfalle teilausgestanzte Laschen, die in das Innere des Lüfterrades 9 umgebogen sind.

Im dargestellten Beispielsfalle sind die Ablenkeinrichtungen 29 ca. 45° nach innen umgebogen.

Wie deutlich aus Figur 2 hervorgeht, weisen die Öffnungen 27 eine im wesentlichen quadratische Form auf, das Lüfterrad 9 weist in herkömmlicher Weise Schaufeln 31 auf, die der Funktion des Gebläses dienen.

Wie aus Figur 1 ersichtlich, ist gegenüber dem oberen Öffnungsbereich bzw. der oberen Öffnung 27 des Lüfterrades 9 eine Zufuhröffnung 33 vorgesehen, durch die mittels des Lüfterrades 9 Frischluft gemäß den Pfeilen 35 angesaugt wird. Die angesaugte Luft, die gemäß der vorliegenden Erfindung trockene Frischluft ist, strömt in die durch Drehung des Lüfterrades 9 sich vorbeibewegenden Öffnungen 27 und trifft auf den sich radial erstreckenden aus dem Garraum angezogenen Gasstrom.

Auf der Rückseite der Ablenkeinrichtungen 29 folgt eine entsprechende Ablenkung des aus dem Garraum 3 strömenden Gasstromes, wodurch eine Umlenkung des Stromes erfolgt, was wiederum zur Folge hat, daß Frischluftzufuhr ungehinderter angesaugt werden kann.

An die Zufuhröffnung 33 ist eine Zuführleitung 37 angeschlossen, in die Frischluft gemäß Pfeil 39 eingesaugt wird.

In der Zufuhrleitung 37 ist ein Ventil 41 eingebracht, das im dargestellten Ausführungsfall ein Drehventil ist und je nach Stellung eine mehr oder weniger große Zuluftstrommenge einströmen läßt.

In einer alternativen - nicht dargestellten - Ausführungsform kann auch ein Ventil dergestalt vorgesehen werden, welches einen Verschlußkolben, der im wesentlichen quer zur Luftströmrichtung verläuft, aufweist, der mit einem Ventilsitz zusammenwirkt. An dem Ventilkolben ist eine Stange befestigt, die sich nach unten und aus der Zufuhrleitung 37 hinaus erstreckt. Die Stange ist mit einem Magnetventil verbunden, das auf Anregung die Stange nach oben schiebt und damit das Ventil öffnet. Wenn kein Strom am Magnetventil anliegt schließt der Kolben das Ventil durch die eigene Schwerkraft bzw. zusätzlich durch den in der Zufuhrleitung durch das Lüfterrad 9 in Verbindung mit den Öffnungen 27 und den Ablenkeinrichtungen 29 erzeugten Unterdruck.

Die vorliegende Erfindung ist nicht auf die beschriebenen bzw. dargestellten Ausführungsbeispiele beschränkt.

Beispielsweise kann die Form der Öffnungen 27 jegliche geeignete Form aufweisen, beispielsweise rechteckförmig, rund oder trapezförmig.

Weiterhin ist auch ein mehrteiliger Aufbau des Lüfterrades und der Ablenkeinrichtungen möglich, beispielsweise durch Anschrauben oder sonstiges befestigen entsprechender Winkelplatten an der Stirnseite 25 des Lüfterrades.

Darüber hinaus kann neben der Ablauföffnung des Kondensats oder auch anstelle wenigstens eine Abluftöffnung an geeigneter Stelle vorgesehen sein. Diese ist vorzugsweise mit einer Klappe versehen, mit der das Öffnen und Schließen der Abluftöffnung steuerbar ist. Vorteilhafterweise ist diese Steuerung mit der Steuerung der Frischluftzufuhr gekoppelt.

Die Ablenkeinrichtungen sind in einer bevorzugten Ausführungsform eben ausgebildet. Je nach Oprtimierung der Strömung im Lüfterrad können diese auch gewölbt bzw. gebogen ausgebildet sein.

Insgesamt wird mit der vorliegenden Erfindung somit die Möglichkeit geschaffen, auf einfache Weise einen Garraum eines Dampfgargerätes gezielt zu entfeuchten, und dadurch Garvorgänge zu ermöglichen, die den zeitgemäßen Ansprüchen einer modernen Gartechnik entsprechen.

## Patentansprüche

1. Verfahren zum Entfeuchten eines zumindest teilweise mit Dampf gefüllten Garraumes (3) eines Dampfgargerätes (1), bei dem der Dampf bzw. das Heißluft-Dampfgemisch mittels eines Lüfterrades (9) eines Radialgebläses im Garraum (3) umgewälzt wird, wobei in dem zentralen Bereich (10) des Lüfterrades (9) das umzuwälzende Dampfgemisch im wesentlichen axial aus dem zentralen Bereich des Garraums (3) angesaugt wird und im wesentlichen radial nach außen beschleunigt und abgeleitet wird, wobei überschüssiger Dampf bzw. überschüssiges Heißluft-Dampfgemisch über eine Abluftöffnung (11) aus dem Garraum (3) abgelassen wird und zur Entfeuchtung trockene Frischluft von außen rückseitig zugeführt wird, wobei die Frischluft durch in der rückwärtigen Stirnseite (25) des Lüfterrades (9) vorgesehene Öffnungen (27) angesaugt wird,
**dadurch gekennzeichnet,**
**daß** die Frischluft mittels in den Öffnungen (27) vorgesehen Ablenkeinrichtungen (29), nach dem Äußeren des Lüfterrades (9) abgelenkt wird, wobei die Frischluft an bevorzugt ebenen Ablenkplatten abgelenkt wird, die schräg in das Innere des Lüfterrades (9) vorspringen.

2. Verfahren nach Anspruch 1, **dadurch gekennzeichnet, daß** die Frischluftzufuhr mittels eines Ventils (41) in einer Frischluftzufuhrleitung (37) gesteuert wird.

3. Vorrichtung zum Entfeuchten eines zumindest teilweise mit Dampf gefüllten Garraumes (3) eines Dampfgargerätes (1), mit einem in dem Gargerät zur Umwälzung des darin enthaltenen Dampfes bzw. Heißluft-Dampfgemisches angeordneten Lüfterrad (9), das eine Öffnung aufweist, die dem Mittenbereich des Garraumes (3) zugeordnet ist, wobei das Lüfterrad (9) an seiner Umfangsseite verteilt angeordnete radial verlaufende Lüfterradschaufeln (31) aufweist, wobei für das Abführen des überschüssigen Dampfes bzw. Heißluft-Dampfgemisches eine Abluftöffnung (11) vorgesehen ist, wobei wenigstens eine Frischluftzuführöffnung (33) vorgesehen ist, und wobei in der dem Mittelbereich des Garraums (3) abgewandten hinteren Stirnseite (25) des Lüfterrades (9) eine Mehrzahl von Öffnungen (27) vorgesehen ist,
**dadurch gekennzeichnet,**
**daß** in den Öffnungen (27) Ablenkeinrichtungen (29) des eintretenden Luftstroms vorgesehen sind, die als bevorzugt ebene Ablenkplatten ausgebildet sind, die schräg in das Innere des Lüfterrades (9) vorspringen.

4. Vorrichtung nach Anspruch 3, **dadurch gekennzeichnet, daß** die Ablenkeinrichtungen (29) mit der zugehörigen Stirnseite (25) des Lüfterrades (9) einen Winkel von 30° bis 60°, bevorzugt von ca. 45° einschließen.

5. Vorrichtung nach Anspruch 3 oder 4, **dadurch gekennzeichnet, daß** die Öffnungen (27) rechteckförmig ausgebildet sind, wobei sie bevorzugt quadratisch ausgebildet sind.

6. Vorrichtung nach einem der Ansprüche 3 bis 5, **dadurch gekennzeichnet, daß** die Ablenkeinrichtungen (29) durch aus der zugehörigen Stirnseite (25) des Lüfterrades (9) teilweise ausgeschnittene und in das Innere des Lüfterrades (9) gebogene Abschnitte gebildet sind.

7. Vorrichtung nach einem der Ansprüche 3 bis 6, **dadurch gekennzeichnet, daß** die wenigstens eine Frischluftzuführöffnung (33) oberhalb der Drehachse des Lüfterrades (9) angeordnet ist.

8. Vorrichtung nach einem der Ansprüche 3 bis 7, **dadurch gekennzeichnet, daß** an die Frischluftöffnung (33) eine Zuführleitung (37) angeschlossen ist.

9. Vorrichtung nach Anspruch 8, **dadurch gekennzeichnet, daß** die Zuführleitung ein steuerbares Ventil (41) zur Dosierung der Frischluftzufuhr aufweist.

10. Vorrichtung nach Anspruch 9, **dadurch gekennzeichnet, daß** das Ventil (41) eine drehbare Klappe ist.

11. Vorrichtung nach Anspruch 9, **dadurch gekennzeichnet, daß** das Ventil ein Abdeckventil mit einer Verschlußkappe und einem Ventilsitz ist, wobei mittels einer Verschlußklappenbetätigungseinrichtung die Verschlußklappe in eine Ventilöffnungsstellung bringbar ist.

12. Dampfgargerät (1) mit einem Garraum (3) zum zumindest teilweisen Garen von Gargut mittels Dampf bzw. einem Heißluft-Dampfgemisch, **dadurch gekennzeichnet, daß** es eine Vorrichtung zum Entfeuchten des Garraumes nach einem der Ansprüche 3 bis 11 aufweist.

## Claims

1. Method of removing dampness from a cooking space (3) of a steam cooking device or a pressure cooker (1), said cooking space being at least partially filled with steam, wherein the steam or the mixture of hot air and steam, respectively, is circulated in the cooking space (3) by means of a ventilating wheel (9) of a radial fan, the steam mixture to be circulated in the central area (10) of the ventilating wheel (9) being sucked in substantially axially from the central area of the cooking space (3) and being accelerated and drawn off to the outside substantially radially, with superfluous steam or superfluous mixture of hot air and steam, respectively, being removed from the cooking space (3) through a waste air opening (11) and dry fresh air being supplied from outside at the rear side for removing dampness, wherein said fresh air is sucked in through openings (27) provided in the rear front end (25) of said ventilating wheel (9),
**characterized in**
**that** said fresh air is deflected to the outside of said ventilating wheel (9) by means of deflecting means (29) being provided in said openings (27), wherein said fresh air is deflected at preferably plane deflecting plates projecting obliquely into the interior of said ventilating wheel (9).

2. Method according to claim 1, **characterized in that** the fresh air supply is controlled by means of a valve (41) in a fresh air supply lead (37).

3. Device for removing dampness from a cooking space (3) of a steam cooking device or a pressure cooker (1), said cooking space being at least partially filled with steam, comprising a ventilating wheel (9) positioned in said cooker for circulating the steam or mixture of hot air and steam, respectively, contained therein, said ventilating wheel (9) comprising an opening assigned to the central area of said cooking space (3), said ventilating wheel (9) comprising radially extending ventilating wheel blades (31) distributed over its circumference, wherein a waste air opening (11) is provided for removing the superfluous steam or mixture of hot air and steam, respectively, wherein at least one fresh air supply opening (33) is provided for, and wherein a plurality of openings (27) is provided for in the rear front end (25) of said ventilating wheel (9) turned away from the central area of said cooking space (3),
**characterized in**
**that** deflecting means (29) for the entering air flow are provided for in said openings (27), said deflecting means (29) are preferably plane deflecting plates projecting obliquely into the interior of said ventilating wheel (9).

4. Device according to claim 3, **characterized in that** said deflecting means (29) form an angle of 30° to 60°, preferably of approx. 45°, with the pertinent front end (25) of said ventilating wheel (9).

5. Device according to claim 3 or 4, **characterized in that** said openings (27) are of rectangular shape, preferably of square shape.

6. Device according to one of claims 3 to 5, **characterized in that** said deflecting means (29) are formed of sections partially cut out of the pertinent front end (25) of said ventilating wheel (9) and bent into the interior of said ventilating wheel (9).

7. Device according to one of claims 3 to 6, **characterized in that** the at least one fresh air supply opening (33) is positioned above the axis of rotation of said ventilating wheel (9).

8. Device according to one of claims 3 to 7, **characterized in that** a supply lead (37) is connected to said fresh air opening (33).

9. Device according to claim 8, **characterized in that** said supply lead comprises a controllable valve (41) for dispensing the fresh air supply.

10. Device according to claim 9, **characterized in that** said valve (41) is a rotatable flap.

11. Device according to claim 9, **characterized in that** said valve is a cover valve comprising a closure cap and a valve seat, said closure cap being conveyable to a valve opening position by means of a closure cap operating means.

12. Pressure cooker (1) comprising a cooking space (3) for at least partially cooking food by means of steam or a mixture of hot air and steam, respectively, **characterized in that** it comprises a device for removing dampness from the cooking space in accordance with one of claims 3 to 11.

## Revendications

1. Procédé pour déshumidifier un espace de cuisson (3) d'un appareil de cuisson à la vapeur (3) rempli, au moins partiellement, de vapeur, dans lequel la vapeur ou le mélange de vapeur et d'air chaud est mis en circulation dans l'espace de cuisson (3) au moyen d'une roue de ventilateur (9) d'une soufflerie radiale, le mélange de vapeur à faire circuler étant, dans la zone centrale (10) de la roue de ventilateur (9), aspiré de façon sensiblement axiale à partir de la zone centrale de l'espace de cuisson (3) et étant accéléré sensiblement radialement vers l'extérieur et évacué, la vapeur ou un mélange de vapeur et d'air chaud en excès étant évacué de l'espace de cuisson (3) par une ouverture d'évacuation (11) et de l'air frais sec étant amené de l'extérieur en face arrière pour la déshumidification, l'air frais étant aspiré au travers d'ouvertures (27) prévues dans la face frontale arrière (25) de la roue de ventilateur (9), **caractérisé en ce que** l'air frais est dévié au moyen d'organes de déviation (29), prévus dans les ouvertures (27), vers l'extérieur de la roue de ventilateur (9), l'air frais étant dévié sur des plaques de déviation, de préférence planes, et qui font saillie de manière oblique vers l'intérieur de la roue de ventilateur (9).

2. Procédé suivant la revendication 1, **caractérisé en ce que** l'amenée d'air frais est contrôlée au moyen d'une valve (41) dans une conduite d'amenée d'air frais (37).

3. Dispositif pour déshumidifier un espace de cuisson (3) d'un appareil de cuisson à la vapeur (1) rempli, au moins partiellement, de vapeur, comprenant une roue de ventilateur (9) disposée dans l'appareil de cuisson pour faire circuler la vapeur ou le mélange de vapeur et d'air chaud contenu dans celui-ci, laquelle roue de ventilateur présente une ouverture associée à la zone médiane de l'espace de cuisson (3), la roue de ventilateur (9) présentant des aubes de roue de ventilateur (31) réparties sur sa face périphérique et s'étendant radialement, une ouverture d'évacuation d'air (11) étant prévue pour l'évacuation de la vapeur ou du mélange de vapeur et d'air chaud en excès, au moins une ouverture d'amenée d'air frais (33) étant prévue, et une pluralité d'ouvertures (27) étant prévue dans la face frontale arrière (25) de la roue de ventilateur (9), opposée à la zone médiane de l'espace de cuisson (3), **caractérisé en ce que** des organes de déviation (29) du flux d'air entrant sont prévus dans les ouvertures (27), ces organes étant de préférence réalisés sous forme de plaques planes qui font saillie de manière oblique vers l'intérieur de la roue de ventilateur (9).

4. Dispositif selon la revendication 3, **caractérisé en ce que** les organes de déviation (29) forment avec la face frontale correspondante (25) de la roue de ventilateur (9) un angle de 30 à 60°, de préférence d'environ 45°.

5. Dispositif suivant l'une des revendications 3 et 4, **caractérisé en ce que** les ouvertures (27) sont réalisées sous forme rectangulaire, de préférence carrée.

6. Dispositif suivant l'une des revendications 3 à 5, **caractérisé en ce que** les organes de déviation (29) sont formés par des tronçons partiellement découpés dans la face frontale correspondante (25) de la roue de ventilateur (9) et recourbés à l'intérieur de la roue de ventilateur (9).

7. Dispositif suivant l'une des revendications 3 à 6, **caractérisé en ce que** la ou les ouvertures d'amenée d'air frais (33) est (sont) disposée(s) au-dessus de l'axe de rotation de la roue de ventilateur (9).

8. Dispositif suivant l'une des revendications 3 à 7, **caractérisé en ce qu'**une conduite d'amenée (37) est reliée à l'ouverture d'amenée d'air frais (33).

9. Dispositif suivant la revendication 8, **caractérisé en ce que** la conduite d'amenée présente une valve réglable (41) pour régler l'amenée d'air frais.

10. Dispositif suivant la revendication 9, **caractérisé en ce que** la valve (41) est un clapet susceptible de tourner.

11. Dispositif suivant la revendication 9, **caractérisé en ce que** la valve est une valve de recouvrement munie d'un clapet d'obturation et d'un siège de clapet, le clapet étant susceptible d'être amené en position d'ouverture de valve, à l'aide d'un organe d'actionnement de clapet d'obturation.

12. Appareil de cuisson à la vapeur (1) comprenant un espace de cuisson (3) pour la cuisson, au moins partielle, de produits à cuire au moyen de vapeur ou d'un mélange de vapeur et d'air chaud, **caractérisé en ce qu'**il comporte un dispositif pour déshumidifier l'espace de cuisson selon l'une des revendications 3 à 11.
